# EUROPEAN PATENT SPECIFICATION

(11) **EP 3 904 781 B1**
(45) Date of publication and mention of the grant of the patent: **06.03.2024**
(21) Application number: 20172397.0
(22) Date of filing: 30.04.2020
(51) Int. Cl.: F24H 9/1863, F24H 3/04, F24H 9/20

(54) **ELECTRIC HEATING DEVICE**
ELEKTRISCHE HEIZVORRICHTUNG
DISPOSITIF DE CHAUFFAGE ÉLECTRIQUE

(43) Date of publication of application: 03.11.2021
(73) Proprietor: Mahle International GmbH, 70376 Stuttgart (DE)
(72) Inventor: EDEL, Nicolas, 68360 Soultz-Haut-Rhin (FR); MAGNIER, Gilles, 90110 Rougemont-le-Chateau (FR); FEUGERE, Jacques, 68360 Soultz-Haut-Rhin (FR); DAUDON, Guillaume, 88470 La Bourgonce (FR); STOECKEL, Jérôme, 68540 Bollwiller (FR)
(74) Representative: BRP Renaud & Partner mbB Rechtsanwälte Patentanwälte Steuerberater

(56) References cited:
- EP-A1- 3 290 819
- EP-A2- 1 338 451
- DE-A1-102011 054 406

## Description

The present invention relates to an electric heating device, in particular for a motor vehicle, having a heating module with at least one electric heating element and a power electronic for electrically supplying the heating module, wherein the power electronic is arranged in a control housing.

For heating a fluid an electric heating device can be used. Electric heating devices are in particular used in motor vehicles in order to heat a fluid, for instance air.

Such an electric heating device is known from EP 2 017 548 B1. The heating device comprises heating modules. Each heating module comprises at least one electric heating element. A power electronic supplies the heating modules with electric power. When electrically supplied, the heating elements produce heat. The heating modules are arranged in a volume through which a flow path of the fluid to be heated passes. Thus, in operation, there is a heat transfer from the heating modules to the fluid in the volume. The heating device further comprises a control housing in which the power electronic is arranged. The control housing comprises openings through which electrically conducting contact latches pass and are connected to the heating modules and the power electronic for electrically supplying the heating modules. Between a bottom of the control housing facing the modules and the volume a base is arranged. On the, base for each contact latch there is a corresponding sealing through which the contact latch passes.

Further such heating devices are known from EP 3 290 819 A1, EP 1 338 451 A2 and DE 10 2011 054 406 A1.

A disadvantage of heating devices known from prior art is an insufficient fluidic separation of the power electronic from the fluid. In addition, unintended electrical contacts between the modules and the power electronic can occur. These contacts can lead to leakage currents and electromagnetic disturbances, in particular noises regarding the electromagnetic compatibility, also known as EMC noise. The leakage and the noise lead to operation disturbances of the heating device which can lead to a failure of the heating device. In addition, these disturbances can affect neighboring appliances.

With growing demands on the heating device, in particular with increasing operation voltages, the probability of current leakage and EMC noises increases leading to increase of said disadvantages.

The object addressed by the present invention is therefore the disclosure of an improved, or at least an alternative, embodiment of an electric heating device of the above-mentioned type, which is in particular characterized by improved operation reliability and/or a simplified manufacture.

The present invention is based upon the general idea whereby, in an electric heating device for heating a fluid, a heating module with at least one electric heating element comprises an outer cover made of metal or alloy, wherein the cover surrounds the at least one heating element, and wherein a longitudinal end of the heating module is arranged in a housing made of metal or alloy in which housing a power electronic for electrically supplying the heating module is arranged, and wherein a sealing arrangement both electrically insulates the outer cover from the housing and fluidically seals the power electronic against the fluid. The combined electric insulation and fluidic sealing leads to a simplified design and thus manufacture of the heating device. In addition, the sealing arrangement prevents leakage currents between the outer cover and the housing and the fluid form flowing into the housing or at least reduced their amount. Thus electric losses, short circuits and noises in electromagnetic compatibility, also known as EMC noises, are reduced and lead to an improved operation reliability of the heating device.

In accordance with the idea of the invention, the electric heating device, hereinafter also referred to as heating device, comprises a heating module. The heating module serves the purpose of heating the fluid. For this purpose, the heating module comprises at least one electric heating element. Each heating element generates heat when it is supplied with electrical power. That is, each electric heating element, in operation, generates heat when it is electrically supplied. The heating module, hereinafter also referred to as module, is arranged in a heat transfer volume through which a flow path of the fluid passes, such that, in operation, the heating module and the fluid transfer heat. The module extends in a longitudinal direction wherein the outer cover made of metal or alloy surrounds, in particular encloses, the at least one electric heating element in a circumferential direction. The circumferential direction is given with respect to the longitudinal direction. That is, the circumferential direction runs circumferential with respect to the longitudinal direction. The housing accommodating the power electronic is also referred to as control housing in the following. The control housing is made of metal or alloy and delimits a volume, in with the power electronic is arranged. This volume is also referred to as control volume in the following. The power electronic electronically supplies the heating module, in particular the at least one electric heating element. The control housing comprises an opening through which a longitudinal end of the heating module is inserted and passed, wherein the opening is also referred to as pass opening in the following. The heating module is electrically connected to the power electronic in the control housing. The electrical connection to the power electronic is in particular realized via the longitudinal end of the module. The sealing arrangement is arranged in the pass opening between an inner jacket of the pass opening and the outer cover. The sealing arrangement fluidically seals the control volume against the heat transfer volume and electrically insulates the outer cover from the control housing.

The outer cover, also referred to as cover in the following, leads to an homogenous heat transfer from the heating module and, in addition, mechanically protects the at least one electric heating element. The outer cover is preferably closed in circumferential direction. This allows a beneficial heat transfer between the module and the fluids and leads to an improved mechanical protection of the at least one heating element.

The outer cover is in particular design in a tube like manner. The outer cover can for instance be designed in a flat tube like manner.

The sealing arrangement advantageously runs closed in circumferential direction. This leads to a sealing and insulation over the whole circumference.

The respective heating element can in principle have any design, provided it generates heat when it is supplied with electric power.

The respective heating element can for instance have a positive temperature coefficient electric resistance. The respective heating element can be in particular a positive temperature coefficient element also known as PTC element.

The control housing appropriately comprises a bottom facing the heat transfer volume, wherein the bottom comprises the pass opening. The bottom can further delimit the heat transfer volume and/or the control volume.

The control housing and the cover can be made of any metal or alloy. The control housing and/or the cover can for instance be made of aluminum or aluminum alloy.

In preferred embodiments the sealing arrangement comprises an elastic sealing body that is deformed in order to seal the control volume against the heat transfer volume. The deformation of the sealing body is achieved by mechanically loading the sealing body. The sealing body is appropriately electrically insulating. The use of the sealing body leads to a reliable and stable fluidic sealing and electric insulation. The elastic property of the sealing body further allows relative movements between the cover and the control housing. This leads to an improved balance of thermal expansion and/or shrinkage.

The sealing body appropriately comprises an opening also referred to as aperture in the following, wherein the cover is passed through the aperture.

In principle, the sealing body can be made of any material or composition, provided it is elastic and preferably insulating. In preferred embodiments the sealing body is a rubber.

In principle, the mechanical load to deform the sealing body can be realized in any manner.

According to a possible solution the sealing body is deformed by a mechanical load realized using the cover and the control housing. That is in particular, the inner jacket and the outer cover mechanically load and deform the sealing body. This solution allows omitting further components for deforming the sealing body. That is, the sealing body can solely be mechanically loaded and deformed by the inner jacket and the cover. This leads to a simplified design of the heating device and thus a simplified manufacture of the heating device.

The mechanical load of the sealing body realized by the cover and the inner jacket can be achieved by press fitting the cover through the aperture of the sealing body leading to a deformation of the sealing body towards the inner jacket.

Alternative or additional a press body separate from the outer cover and the inner jacket mechanically loads and deforms the sealing body. The use of the separate press body allows a simplified assembly of the heating device and thus leads to a simplified manufacture of the heating device. The press body is preferably arranged on the side of the pass opening averted from the heat transfer volume. The press body is in particular arranged in the control housing.

The term separate in the context of the present invention means that the separate component is not a part of the components it is separate from. In particular the separate component is produced separately from the components it is separate from.

The sealing body can be produced in any manner, provided it is elastic and preferably electrically insulating.

In advantageous embodiments the sealing body is a molded part. That is, the sealing body is produced by a molding procedure. In preferred embodiments the sealing body is an injection mold part. This leads to a cost reduced and precise design of the sealing body and thus to a reliably sealing and insulation.

It is preferred if the pass opening is insert-molded with the sealing body. That is, the cover housing, in particular the pass opening, is used as an insert for the molding procedure to produce the sealing body. This prevents or at least reduces fluidic flows between the sealing body and the cover housing, in particular the inner jacket. The sealing of the control volume against the heat transfer volume and the electric insulation are hence improved. Moreover, local gaps between the sealing body and the inner jacket are at least reduced. As these gaps allow an electric current within the respective gap with increasing voltages the prevention or at least reduction of these gaps leads to improved electric insulation.

In preferred embodiments the sealing arrangement consists of the sealing body. That is, the sealing arrangement is the sealing body.

According to preferred embodiments the sealing arrangement comprises an inelastic and electrically insulating plastic body that is separate from the heating module. The plastic body is arranged in the pass opening and forms a form closure with the pass opening. The plastic body comprises an opening also referred to as body opening in the following. The heating module is passed through the body opening into the control volume. In particular due to the inelasticity of the plastic body a fluidic path can run between the plastic body opening and the cover. This fluidic path, also referred to as inner path in the following, is fluidically sealed by an electrically insulating sealing element of the sealing arrangement, also referred to as inner sealing element in the following. The sealing element is separate from the plastic body and attached to the plastic body. In this embodiment, the plastic body functions as an interface which carriers the sealing element.

The plastic body can be separate from the control housing. In particular due to the inelasticity of the plastic body a fluidic path can run between the plastic body and the inner jacket. This fluidic path, also referred to as outer path in the following, is sealed by an electrically insulating sealing element of the sealing arrangement, also referred to as outer sealing element in the following. The outer sealing element is separate from the plastic body and attached to the plastic body. In this embodiment, the plastic body functions as an interface, which carriers the inner sealing element and outer sealing element. In this embodiment the sealing arrangement may consist of the plastic body, the inner sealing element and the outer sealing element.

In an alternative embodiment the pass opening is insert-molded with the plastic body. That is, the cover housing, in particular the pass opening, is used as an insert for the molding procedure to produce the sealing body. The pass opening is preferably injection insert-molded with the plastic body. This leads to prevention of a fluidic path between the inner jacket und the plastic body. Thus an outer sealing element is not necessary in this embodiment leading to a simplified manufacture of the heating device. As a consequence, this embodiment is preferably free of an outer sealing element. In this embodiment the sealing arrangement may therefore consist of the plastic body and the inner sealing element.

The respective sealing element can be designed and manufactured in any manner, provided it is electrically insulating and, in operation, seals the corresponding fluidic path.

The respective sealing element is preferably elastic. As an alternative or in addition, the respective sealing element can be an adhesive, in particular a liquid adhesive, applied to the plastic body and the cover in case of the inner sealing element or applied to the plastic body and the control housing in case of the outer sealing element.

It is preferred if the respective sealing element is arranged on the side of the plastic body averted from the heat transfer volume. This simplifies the provision of the sealing element and thus leads to a simplified manufacture of the heating device.

It is understood that the heating device can comprise two or more such heating modules, which are appropriately distanced to another. The cover housing comprises, for each heating module, a corresponding pass opening. It is preferred if for each pass opening and the corresponding heating module there is a corresponding sealing arrangement in accordance with the invention.

The heating device can in principle be used in any appliance for heating the fluid in the appliance.

The heating device is in particular used in a motor vehicle to heat a fluid, for instance air. The heating device can in particular be a supplement heater.

Further important characteristics and advantages of the invention proceed from the sub-claims, the drawings and the associated description of the figures, with reference to the drawings.

It is understood that the above-mentioned characteristics, and those to be described hereinafter, are not only applicable in the respective combination indicated, but also in other combinations, or in isolation, without departing from the scope of the present invention which is defined by the appended claims.

Preferred exemplary embodiments of the invention are represented in the drawings and described in greater detail in the following description, wherein identical reference numbers identify identical, similar or functionally equivalent components.

In the figures show, schematically in each case:
- Fig. 1: a section through an electric heating device with a control housing and heating modules,
- Fig. 2: an enlarged view of the heating device of Figure 1 in the region of a heating module,
- Fig. 3: the view of Figure 2, in another exemplary embodiment,
- Fig. 4: the view of Figure 3, in a further exemplary embodiment.

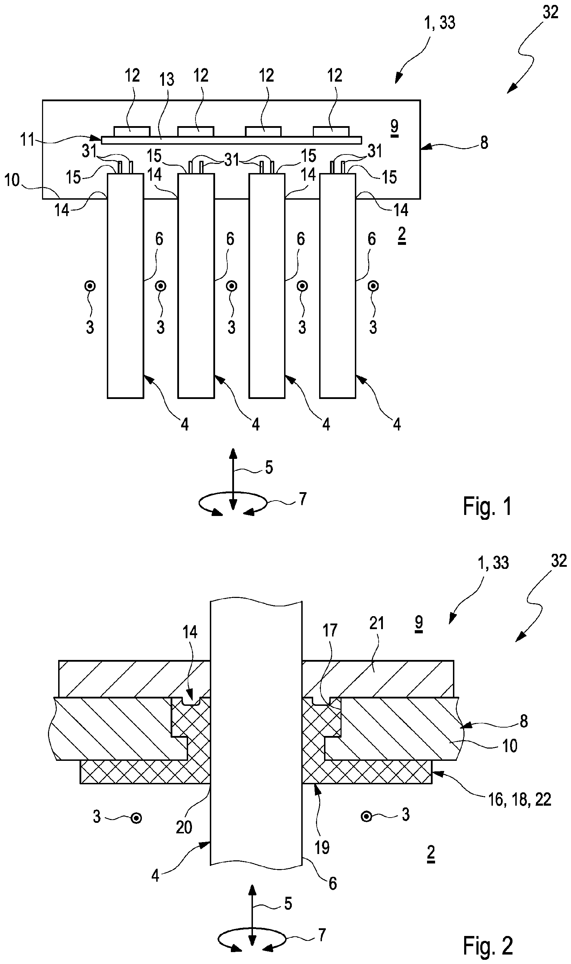

An electric heating device 1, as shown exemplary in Figures 1 to 4, serves the purpose of heating a fluid, in particular air, by using electric heating elements (not visible), which generate heat when they are supplied with electric power. For this purpose, the electric heating device 1, also referred to as heating device 1 in the following, comprises a heat transfer volume 2 through which a flow path 3 of the fluid passes. The heating device 1 further comprises at least one heating module 4 arranged in the heat transfer volume 2. In the shown embodiment the heating device comprises, by way of example, four heating modules 4. The heating modules 4 extend in a longitudinal direction 5 and are distanced to each other transversely to the longitudinal direction 5. Each heating module 4 comprises at least one electric heating element, for instance a positive temperature coefficient element also known as PTC element. Thus, in operation, heat is transferred from the heating modules 4 to the fluid and the fluid hence heated. The respective heating module 4 comprises an outer cover 6 made of metal or alloy, in particular made of aluminum or aluminum alloy. The cover 4 is designed in a tube-like manner and encloses the at least one electric heating element of the corresponding heating module 4 in a circumferential direction 7 which runs circumferential with respect to the longitudinal direction 5. A housing 8 of the heating device 1 delimits a volume 9, also referred to as control volume 9 in the following. The housing 8 also referred to as control housing 8 in the following, separates the control volume 9 from the heat transfer volume 2. In the shown embodiment, the housing 8 comprises a bottom 10 that delimits both the control volume 9 and the heat transfer volume 2. A power electronic 11 of the heating device 1 is accommodated in the control volume 9 of the housing 8. The power electronic 11 supplies electric power to the heating modules 4, in particular to the electric heating elements. The power electronic 11 appropriately comprises at least one power transistor 12 and a printed circuit board 13 on which the at least one power transistor 12 is arranged in the known manner. In the shown example the power electronic 11, by way of example, has four power transistors 12.

The control housing 8 comprises, for each heating module 4 a corresponding opening 14. Each heating module 4 is passed through the corresponding opening 14, also referred to as pass opening 14 in the following, and is inserted into the control volume 9 with a longitudinal end 15. An electric connection of each heating module 4 with the power electronic 11 is realized within the control housing 8, for instance using electrical connectors 31 on the longitudinal end 15 of the respective heating module 4.

Figures 2 to 4 each show a section of the heating device 1 in the region of one of the pass openings 14. According to Figures 2 to 4, the heating device 1 comprises, for each pass opening 14 a corresponding sealing arrangement 16 not shown in Figure 1. Each sealing arrangement 16 is arranged in the corresponding pass opening 14 between an inner jacket 17 of the pass opening 14 and the outer cover 6 of the corresponding heating module 4. Each sealing arrangement 16 runs closed in circumferential direction 7. Each sealing arrangement 16 fluidically seals the control volume 9 against the heat transfer volume 2 and therefore prevents fluids from flowing from the heat transfer volume 2 into the control volume 9 through the corresponding pass opening 14. Moreover, each sealing arrangement 16 electrically insulates the corresponding outer cover 6 from the control housing 8, in particular from the corresponding inner jacket 17.

In the exemplary embodiment of Figure 2, the sealing arrangement 16 comprises an elastic and electrically insulating sealing body 18. In this exemplary embodiment, the sealing arrangement 16 consists of the sealing body 18. In this exemplary embodiment, the inner jacket 17 is stepped, by way of example. The sealing body 18 forms a form closure 19 with the pass opening 14 and is arranged between the outer cover 6 and the inner jacket 17. The sealing body 18 comprises an opening 20 referred to as aperture 20 in the following. The heating module 4 is passes through the aperture 20 into the control volume 9. In order to seal the control volume 9 against the heat transfer volume 2, the sealing body 18 is mechanically loaded and deformed. This load can be achieved by the inner jacket 17 and the outer cover 6. For instance, the heating module 4 can be press fitted through the aperture 20, such that the outer cover 6 mechanically loads and deforms the sealing body 18 against the inner jacket 17.

As shown in Figure 2, as an alternative or in addition, a press body 21 separate from the outer cover 6 and from the inner jacket 17 can mechanically load and deform the sealing body 18. The press body 21 is arranged on the side of the sealing body 18 averted from the heat transfer volume 2. In the example shown, the press body 21 is arranged in the control volume 9.

The sealing body 18 is preferably a rubber made by injection molding. That is, the sealing body 18 is preferably a molded part 22. It is preferred if the pass opening 14 is insert-molded with the sealing body 18.

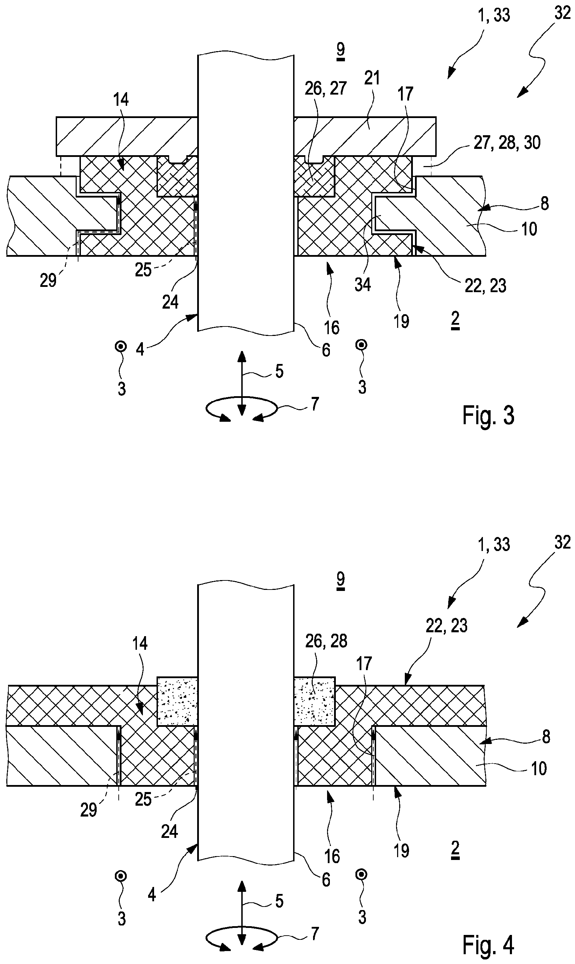

In the exemplary embodiments of Figure 3 and Figure 4, the sealing arrangement 16 comprises an inelastic and electrically isolating plastic body 23. The plastic body 23 is separate from the heating module 4 and is arranged in the pass opening 14. In the exemplary embodiment of Figure 3 the inner jacket 17 comprises an inner and central projection 34. In the exemplary embodiments of Figure 4 the inner jacket 17 is shaped flat. The plastic body 23 is arranged in the pass opening 14 between the inner jacket 17 and the outer cover 6 and forms a form closure 19 with the pass opening 14. The heating module 4 is passed through an opening 24 of the plastic body 23, also referred to as body opening 24 in the following. A fluidic path 25 between the outer cover 6 and the plastic body 23, also referred to as inner path 25 in the following, is sealed by a sealing element 26 of the sealing arrangement 16, also referred to as inner sealing element 26 in the following. The sealing element 26 is separate from the plastic body 23 and electrically insulating. The sealing element 26 is attached to, in particular applied on, the plastic body 23 and the outer cover 6. The plastic body 23 therefore acts as an interface for the sealing element 26 which carries the sealing element 26.

In the exemplary embodiment of Figure 3 the sealing element 23 is an elastic sealing 27 which is mechanically loaded and deformed by a press body 21 arranged on the side of the sealing arrangement 16 averted from the heat transfer volume 2. In the example shown, the press body 21 is arranged in the control volume 9.

In the exemplary embodiment of Figure 4 the sealing element 23 is an adhesive 28 applied to the plastic body 23 and the outer cover 6. As a consequence, there is no need for a press body 21 in this embodiment.

The plastic body 23 is advantageously a molded part 22. It is preferred if the pass opening 14 is insert-molded with the plastic body 23. In this way a possible fluidic path 29 between the inner jacket 17 and the plastic body 23, also referred to as outer path 29 in the following, is prevented, although the outer path 29 is shown in Figures 3 and 4. In this example the sealing arrangement 16 consists of the plastic body 23 and the inner sealing element 26.

In an alternative example, the plastic body 23 is separate from the control housing 8. This leads to said outer path 29 which is sealed by using a sealing element 30 of the sealing arrangement 16, also referred to as outer sealing element 30 in the following. The outer sealing element 30 is indicated in Figure 3 only by dashed lines. The outer sealing element 30, like the inner sealing element 26, is separate from the plastic body 23 and attached to, in particular applied on, the plastic body 23 and the control housing 8. In this example the sealing arrangement 16 consists of the plastic body 23, the inner sealing element 26 and the outer sealing element 30.

Like the inner sealing element 26, the outer sealing element 30 can be an elastic sealing 27 that might be mechanically loaded using a press body 21, in particular the press body loading the inner sealing element 26, or an adhesive 28 applied on the plastic body 21 and the cover housing 8.

The heating device 1 is, by way of example, used in a motor vehicle 32, where it can serve as a supplement heater 33.

## Claims

1. Electric heating device (1), in particular for a motor vehicle (32),
- with a heating module (4) which comprises at least one electric heating element that, in operation, generates heat when it is electrically supplied,
- with a heat transfer volume (2),
- wherein the heating module (4) is arranged in the heat transfer volume (2) through which a flow path (3) of a fluid passes, such that, in operation, the heating module (4) and the fluid transfer heat,
- wherein the heating module (4) extends in a longitudinal direction (5),
- with a control housing (8) made of metal or alloy which delimits a control volume (9),
- with a power electronic (11) for electrically supplying the heating module (4), which is arranged in the control volume (9),
- the heating module (4) comprises an outer cover (6) made of metal or alloy that surrounds the at least one heating element in a circumferential direction (7) running circumferential with respect to the longitudinal direction (5),
- the control housing (8) comprises a pass opening (14) through which a longitudinal end (15) of the heating module (4) is passed,
- the heating module (4) is electrically connected to the power electronic (11) in the control housing (8),
- a sealing arrangement (16) fluidically seals the control volume (9) against the heat transfer volume (2),
**characterized in that** the sealing arrangement (16) is arranged in the pass opening (14) between an inner jacket (17) of the pass opening (14) and the outer cover (6),
and electrically insulates the outer cover (6) from the control housing (8).

2. Heating device according claim 1,
**characterized in that**
the sealing arrangement (16) comprises an elastic sealing body (18), wherein the sealing body (18), for sealing the control volume (9) against the heat transfer volume (2), is mechanically loaded and deformed.

3. Heating device according to claim 2,
**characterized in that**
the inner jacket (17) and the outer cover (6) mechanically load and deform the sealing body (18).

4. Heating device according to claim 2 or 3,
**characterized in that**
a press body (21) separate from the outer cover (6) and the inner jacket (17) mechanically loads and deforms the sealing body (18).

5. Heating device according to any of claims 2 to 4,
**characterized in that**
the sealing body (18) is a molded part (22).

6. Heating device according to claim 5,
**characterized in that**
the pass opening (14) is insert molded with the sealing body (18).

7. Heating device according to any of claims 2 to 6,
**characterized in that**
the sealing arrangement (16) consists of the sealing body (18).

8. Heating device according to any of claims 1 to 6,
**characterized in that**
- the sealing arrangement (16) comprises an inelastic and electrically insulating plastic body (23), which is arranged in the pass opening (14) and forms a form closure (19) with the pass opening (14),
- the plastic body (23) is separate from the heating module (4),
- the plastic body (23) comprises a body opening (24) through which the heating module (4) is passed into the control volume (9), wherein a fluidic inner path (25) runs between the body opening (24) and the outer cover (6),
- the sealing arrangement (16) comprises an inner sealing element (26) that is electrically insulating and fluidically seals the inner path (25), wherein the inner sealing element (26) is separate from the plastic body (23) and attached to the plastic body (23).

9. Heating device according to claim 8,
**characterized in that**
- the plastic body (23) is separate from the control housing (8), wherein a fluidic outer path (29) runs between the plastic body (23) and the inner jacket (17),
- the sealing arrangement (16) comprises an outer sealing element (30) that is electrically insulating and fluidically seals the outer path (29), wherein the outer sealing element (30) is separate from the plastic body and attached to the plastic body.

10. Heating device according to claim 8,
**characterized in that**
the pass opening (14) is insert molded with the plastic body (23).

11. Heating device according to and of claims 8 to 10,
**characterized in that**
the sealing element (26, 30) is an elastic sealing (27) and/or an adhesive (28).

## Patentansprüche

1. Elektrische Heizvorrichtung (1), insbesondere für ein Kraftfahrzeug (32),
- mit einem Heizmodul (4), das mindestens ein elektrisches Heizelement umfasst, das im Betrieb bei elektrischer Versorgung Wärme erzeugt,
- mit einem Wärmeübertragungsvolumen (2),
- wobei das Heizmodul (4) in dem Wärmeübertragungsvolumen (2), durch das ein Strömungsweg (3) eines Fluids verläuft, eingerichtet ist, so dass das Heizmodul (4) und das Fluid im Betrieb Wärme übertragen,
- wobei sich das Heizmodul (4) in einer Längsrichtung (5) erstreckt,
- mit einem Steuergehäuse (8), das aus Metall oder Legierung hergestellt ist, das ein Steuervolumen (9) begrenzt,
- mit einer Leistungselektronik (11) zum elektrischen Versorgen des Heizmoduls (4), die in dem Steuervolumen (9) angeordnet ist,
- das Heizmodul (4) eine äußere Hülle (6), die aus Metall oder Legierung hergestellt ist, umfasst, die das mindestens eine Heizelement in einer in Bezug auf die Längsrichtung (5) umlaufend verlaufenden Umfangsrichtung (7) umgibt,
- das Steuergehäuse (8) eine Durchgangsöffnung (14) umfasst, durch die ein Längsende (15) des Heizmoduls (4) geführt ist,
- das Heizmodul (4) elektrisch mit der Leistungselektronik (11) in dem Steuergehäuse (8) verbunden ist,
- eine Dichtungsanordnung (16) das Steuervolumen (9) gegenüber dem Wärmeübertragungsvolumen (2) fluidisch abdichtet,
**dadurch gekennzeichnet, dass** die Dichtungsanordnung (16) in der Durchgangsöffnung (14) zwischen einem Innenmantel (17) der Durchgangsöffnung (14) und der äußeren Hülle (6) eingerichtet ist
und die äußere Hülle (6) von dem Steuergehäuse (8) elektrisch isoliert.

2. Heizvorrichtung nach Anspruch 1,
**dadurch gekennzeichnet, dass**
die Dichtungsanordnung (16) einen elastischen Dichtungskörper (18) umfasst, wobei der Dichtungskörper (18) zum Abdichten des Steuervolumens (9) gegenüber dem Wärmeübertragungsvolumen (2) mechanisch belastet und verformt wird.

3. Heizvorrichtung nach Anspruch 2,
**dadurch gekennzeichnet, dass**
der Innenmantel (17) und die äußere Hülle (6) den Dichtungskörper (18) mechanisch belasten und verformen.

4. Heizvorrichtung nach Anspruch 2 oder 3,
**dadurch gekennzeichnet, dass**
ein von der äußeren Hülle (6) und von dem Innenmantel (17) getrennter Presskörper (21) den Dichtungskörper (18) mechanisch belastet und verformt.

5. Heizvorrichtung nach einem der Ansprüche 2 bis 4,
**dadurch gekennzeichnet, dass**
der Dichtungskörper (18) ein Formteil (22) ist.

6. Heizvorrichtung nach Anspruch 5,
**dadurch gekennzeichnet, dass**
die Durchgangsöffnung (14) mit dem Dichtungskörper (18) durch Insert-Molding geformt ist.

7. Heizvorrichtung nach einem der Ansprüche 2 bis 6,
**dadurch gekennzeichnet, dass**
die Dichtungsanordnung (16) aus dem Dichtungskörper (18) besteht.

8. Heizvorrichtung nach einem der Ansprüche 1 bis 6,
**dadurch gekennzeichnet, dass**
- die Dichtungsanordnung (16) einen unelastischen und elektrisch isolierenden Kunststoffkörper (23) umfasst, der in der Durchgangsöffnung (14) eingerichtet ist und mit der Durchgangsöffnung (14) einen Formschluss (19) bildet,
- der Kunststoffkörper (23) von dem Heizmodul (4) getrennt ist,
- der Kunststoffkörper (23) eine Körperöffnung (24) umfasst, durch die das Heizmodul (4) in das Steuervolumen (9) hindurchgeht, wobei zwischen der Körperöffnung (24) und der äußeren Hülle (6) ein innerer Fluidweg (25) verläuft,
- die Dichtungsanordnung (16) ein inneres Dichtungselement (26) umfasst, das elektrisch isolierend ist und den inneren Weg (25) fluidisch abdichtet, wobei das innere Dichtungselement (26) von dem Kunststoffkörper (23) getrennt und an dem Kunststoffkörper (23) angebracht ist.

9. Heizvorrichtung nach Anspruch 8,
**dadurch gekennzeichnet, dass**
- der Kunststoffkörper (23) von dem Steuergehäuse (8) getrennt ist, wobei zwischen dem Kunststoffkörper (23) und dem Innenmantel (17) ein äußerer Fluidweg (29) verläuft,
- die Dichtungsanordnung (16) ein äußeres Dichtungselement (30) umfasst, das elektrisch isolierend ist und den äußeren Weg (29) fluidisch abdichtet, wobei das äußere Dichtungselement (30) von dem Kunststoffkörper getrennt und an dem Kunststoffkörper angebracht ist.

10. Heizvorrichtung nach Anspruch 8,
**dadurch gekennzeichnet, dass**
die Durchgangsöffnung (14) mit dem Kunststoffkörper (23) durch Insert-Molding geformt ist.

11. Heizvorrichtung nach einem der Ansprüche 8 bis 10,
**dadurch gekennzeichnet, dass**
das Dichtungselement (26, 30) eine elastische Dichtung (27) und/oder ein Klebstoff (28) ist.

## Revendications

1. Dispositif de chauffage électrique (1), notamment pour véhicule automobile (32),
- avec un module de chauffage (4) qui comprend au moins un élément chauffant électrique qui, en fonctionnement, génère de la chaleur lorsqu'il est alimenté électriquement,
- avec un volume de transfert de chaleur (2),
- dans lequel le module de chauffage (4) est agencé dans le volume de transfert de chaleur (2) à travers lequel passe un chemin d'écoulement (3) d'un fluide, de telle sorte que, en fonctionnement, le module de chauffage (4) et le fluide transfèrent de la chaleur,
- dans lequel le module de chauffage (4) s'étend dans une direction longitudinale (5),
- avec un boîtier de commande (8) en métal ou alliage qui délimite un volume de commande (9),
- avec une électronique de puissance (11) destinée à alimenter électriquement le module de chauffage (4), qui est agencée dans le volume de commande (9),
- le module de chauffage (4) comprend un couvercle externe (6) en métal ou alliage qui entoure le au moins un élément chauffant dans une direction circonférentielle (7) s'étendant circonférentiellement par rapport à la direction longitudinale (5),
- le boîtier de commande (8) comprend une ouverture de passage (14) à travers laquelle est passée une extrémité longitudinale (15) du module de chauffage (4),
- le module de chauffage (4) est connecté électriquement à l'électronique de puissance (11) dans le boîtier de commande (8),
- un système d'étanchéité (16) assure l'étanchéité fluidique du volume de commande (9) par rapport au volume de transfert de chaleur (2),
**caractérisé en ce que** le système d'étanchéité (16) est agencé dans l'ouverture de passage (14) entre une enveloppe interne (17) de l'ouverture de passage (14) et le couvercle externe (6),
et isole électriquement le couvercle externe (6) du boîtier de commande (8).

2. Dispositif de chauffage selon la revendication 1,
**caractérisé en ce que**
le système d'étanchéité (16) comprend un corps d'étanchéité élastique (18), dans lequel le corps d'étanchéité (18), destiné à assurer l'étanchéité du volume de commande (9) par rapport au volume de transfert de chaleur (2), est chargé et déformé mécaniquement.

3. Dispositif de chauffage selon la revendication 2,
**caractérisé en ce que**
l'enveloppe interne (17) et le couvercle externe (6) chargent et déforment mécaniquement le corps d'étanchéité (18).

4. Dispositif de chauffage selon la revendication 2 ou 3,
**caractérisé en ce que**
un corps de compression (21) séparé du couvercle externe (6) et de l'enveloppe interne (17) charge et déforme mécaniquement le corps d'étanchéité (18).

5. Dispositif de chauffage selon l'une quelconque des revendications 2 à 4,
**caractérisé en ce que**
le corps d'étanchéité (18) est une pièce moulée (22).

6. Dispositif de chauffage selon la revendication 5,
**caractérisé en ce que**
l'ouverture de passage (14) est moulée par insertion avec le corps d'étanchéité (18).

7. Dispositif de chauffage selon l'une quelconque des revendications 2 à 6,
**caractérisé en ce que**
le système d'étanchéité (16) consiste en le corps d'étanchéité (18).

8. Dispositif de chauffage selon l'une quelconque des revendications 1 à 6,
**caractérisé en ce que**
- le système d'étanchéité (16) comprend un corps en plastique (23) inélastique et électriquement isolant, qui est agencé dans l'ouverture de passage (14) et forme une fermeture par conjugaison de formes (19) avec l'ouverture de passage (14),
- le corps en plastique (23) est séparé du module de chauffage (4),
- le corps en plastique (23) comprend une ouverture de corps (24) à travers laquelle est passé le module de chauffage (4) dans le volume de commande (9), dans lequel un chemin fluidique interne (25) s'étend entre l'ouverture de corps (24) et le couvercle externe (6),
- le système d'étanchéité (16) comprend un élément d'étanchéité interne (26) qui est électriquement isolant et scelle fluidiquement le chemin interne (25), dans lequel l'élément d'étanchéité interne (26) est séparé du corps en plastique (23) et fixé au corps en plastique (23).

9. Dispositif de chauffage selon la revendication 8,
**caractérisé en ce que**
- le corps en plastique (23) est séparé du boîtier de commande (8), dans lequel un chemin fluidique externe (29) s'étend entre le corps en plastique (23) et l'enveloppe interne (17),
- le système d'étanchéité (16) comprend un élément d'étanchéité externe (30) qui est électriquement isolant et scelle fluidiquement le chemin externe (29), dans lequel l'élément d'étanchéité externe (30) est séparé du corps en plastique et fixé au corps en plastique.

10. Dispositif de chauffage selon la revendication 8,
**caractérisé en ce que**
l'ouverture de passage (14) est moulée par insertion avec le corps en plastique (23).

11. Dispositif de chauffage selon l'une quelconque des revendications 8 à 10,
**caractérisé en ce que**
l'élément d'étanchéité (26, 30) est un joint élastique (27) et/ou un adhésif (28).
